Europäisches Patentamt

European Patent Office

Office européen des brevets

(11) Numéro de publication: **0 406 138 A1**

# (12) DEMANDE DE BREVET EUROPEEN

(21) Numéro de dépôt: **90430013.4**

(22) Date de dépôt: **01.06.90**

(51) Int. Cl.5: **A01J 25/06**

(30) Priorité: **28.06.89 FR 8908930**

(43) Date de publication de la demande:
**02.01.91 Bulletin 91/01**

(84) Etats contractants désignés:
**AT BE CH DE DK ES FR GB GR IT LI NL SE**

(71) Demandeur: **S.A.R.L dite: ROUSSEL INOX**
**La Plaine - Creissels**
**F-12100 Millau(FR)**

(72) Inventeur: **Roussel, Alain**
**La Plaine, Creissels**
**F-12100 Millau(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

(54) **Procédé et cuves cylindro-sphériques de fabrication de fromage.**

(57) L'invention a pour objet un procédé et des cuves cylindro-sphériques de fabrication de fromages.

Une cuve selon l'invention comporte une partie centrale 6 en forme d'auge demi-cylindrique fermée à ses deux extrémités par deux fonds bombés 6a, 6b en forme de quarts de sphère. Elle comporte un capot 2 également cylindro-sphérique qui est équipé d'un arbre axial 8 entraîné en rotation lente par un groupe moto-réducteur 9. L'arbre 8 porte un arbre 10 sur lequel sont fixées des pales de brassage triangulaires 11, 12 évasées vers l'extérieur.

L'ordre 8 est creux et connecté par un joint tournant 15 sur une arrivée d'eau de lavage. La cuve 1 comporte deux parois parallèles 1i, le qui délimitent un espace intermédiaire 3 dans lequel se trouve une rampe perforée 5 de distribution d'eau chaude ou froide.

Une application est la fabrication des fromages à pâte persillée ou à pâte molle.

Fig-1

## PROCÉDÉ ET CUVES CYLINDRO-SPHÉRIQUES DE FABRICATION DE FROMAGE.

La présente invention a pour objet un procédé de fabrication de fromage comportant des opérations de découpage du caillé en grains prismatiques et des cuves cylindro-sphériques pour la mise en oeuvre de ce procédé.

Le secteur technique de l'invention est celui de la construction des cuves destinés à la fabrication industrielle de fromages, notamment de fromages à pâte persillée ou à pâte molle.

La fabrication industrielle de certains fromages comporte des opérations de coagulation du lait suivies d'opérations de découpage du caillé en petits grains prismatiques pour faciliter la synérèse c'est-à-dire la séparation du sérum contenu dans le caillé.

Ces opérations ont lieu habituellement dans des cuves de grande capacité qui ont la forme d'un demi-cylindre à axe horizontal fermé à ses deux extrémités par des parois verticales planes. Le découpage du caillé en grains prismatiques est suivi d'un brassage lent de la masse des grains de caillé que l'on fait tourner sur elle-même pour faire remonter vers la surface les grains situés dans le fond de la cuve afin d'améliorer l'extraction du sérum.

Après quoi, on place le caillé dans des moules.

Dans les cuves cylindriques utilisées à ce jour les opérations de découpage et de brassage du caillé entraînent un effritement de celui-ci qui donne naissance à des petits fragments de caillé qui sont entraînés avec le sérum et qui entraînent donc une perte de rendement.

L'objectif de la présente invention est de procurer de nouveaux moyens, notamment de nouvelles cuves qui évitent la fragmentation du caillé pendant le découpage et le brassage de celui-ci et qui améliorent donc le rendement en fromage.

Un procédé de fabrication de fromage selon l'invention comporte de façon connue une étape de caillage du lait dans une cuve demi-cylindrique à axe horizontal et des opérations de découpage longitudinal et transversal et de brassage du caillé.

L'objectif de l'invention est atteint par un procédé qui comporte les opérations suivantes :
- on fait cailler le lait dans une cuve cylindro-sphérique comportant deux fonds en forme de quart de sphère qui prolongent les extrémités d'une cuve demi cylindrique ;
- on découpe longitudinalement le caillé au moyen d'un outil de découpage qui comporte une grille de fils entrecroisés tendus à l'intérieur d'un cadre fermé comportant une armature périphérique en forme de demi-cercle de même rayon que ladite cuve demi cylindrique et un arbre placé dans l'axe de ladite armature, et les opérations de découpage longitudinal comportent les étapes suivantes :
- on fait pivoter ledit arbre autour d'un axe vertical pour amener ledit outil en position horizontale au-dessus de l'un des fonds sphériques,
- on fait tourner ledit arbre d'un quart de tour autour de son axe vers l'intérieur de la cuve ;
- on déplace ledit arbre et ledit outil en translation longitudinale le long de la cuve cylindrique ;
- on fait tourner à nouveau ledit arbre d'un quart de tour dans le même sens pour amener ledit outil en position horizontale et on fait pivoter ledit arbre autour dudit axe vertical pour amener ledit outil à l'extérieur de la cuve.

Une cuve de fabrication de fromage selon l'invention comporte de façon connue une auge demi-cylindrique, une arrivée de lait et d'un agent de coagulation du lait. des moyens de vidange, un couvercle et des outils de découpage longitudinal et transversal et de brassage du caillé.

Les objectifs de l'invention sont atteints au moyen d'une cuve cylindro-sphérique qui comporte une auge demi-cylindrique fermée à ses deux extrémités, par deux fonds bombés ayant la forme de deux quarts de sphère ayant un rayon identique au rayon de ladite auge cylindrique.

Avantageusement une cuve selon l'invention comporte en outre, en combinaison, un outil de découpage longitudinal du caillé qui comporte une grille de fils entrecroisés qui sont montés à l'intérieur d'un cadre composé d'un arbre horizontal et d'une armature périphérique en forme de demi-cercle ayant un rayon identique à celui de ladite auge cylindrique et est caractérisé en ce que ledit arbre est monté pivotant dans deux paliers montés sur deux chariots qui sont déplaçables en translation longitudinale à l'extérieur de ladite cuve.

Une extrémité de l'arbre horizontal est reliée à l'un des chariots par une tourelle qui pivote autour d'un axe vertical ce qui permet d'amener ledit outil à l'extérieur de ladite cuve pendant les opérations de découpage transversal.

Le capot d'une cuve selon l'invention comporte une partie centrale en forme de demi-cylindre et deux fonds bombés en forme de quarts de sphère raccordés tangentiellement au demi-cylindre central.

Selon un mode de réalisation préférentiel le couvercle est équipé d'un arbre axial qui est entraîné en rotation par un groupe moto-réducteur et qui porte des pales de brassage qui sont situés dans un même plan radial.

Avantageusement les pales ont une forme triangulaire évasée vers l'extérieur et les bords libres des pales d'extrémité ont une forme en arc de cercle qui épouse la forme desdits fonds bombés.

L'invention a pour résultat de nouvelles cuves cylindro-sphériques de fabrication de certains fromages, notamment des fromages à pâte persillée ou à pâte molle.

La forme cylindro-sphérique permet d'obtenir une surface interne unie, sans aucune arête ni angle aigu, de sorte que pendant le brassage lent les grains de caillé qui frottent contre les parois de la cuve ne s'éffrittent pas.

De plus la forme cylindro-sphérique des cuves permet de réaliser des outils de découpage longitudinal du caillé qui rentrent et sortent du caillé contenu dans les fonds sphériques en pivotant autour du diamètre horizontal transversal de ceux-ci de telle sorte que tout le découpage longitudinal s'effectue en une seule opération d'où un gain de temps et s'effectue sans avoir à retirer l'outil de découpage en transversant la masse de caillé déjà découpée longitudinalement ce qui permet d'éviter une cause d'effritement du caillé.

La forme cylindro-sphérique de la cuve combinée à un dispositif de brassage monté sur un arbre axial faisant partie du capot de la cuve permet également d'obtenir un brassage régulier grâce à la forme triangulaire des pales et aux pales d'extrémité qui épousent la forme des fonds bombés sphériques.

La description suivante se réfère aux dessins annexés qui représentent, sans aucun caractère limitatif, un exemple de réalisation d'une cuve selon l'invention destinée à la fabrication de fromages.

La figure 1 est une vue en élévation d'une cuve et de son capot en position relevée.

La figure 2 est une coupe transversale d'une cuve coiffée de son capot.

La figure 3 est une représentation schématique d'une cuve équipée d'un outil de découpage longitudinal du caillé.

La figure 4 est une coupe transversale de l'outil de découpage longitudinal du caillé.

La figure 5 est une représentation schématique d'une cuve équipée d'un outil de découpage transversal et d'un outil de brassage du caillé.

La figure 6 est une demi-vue de dessus d'un mode de réalisation d'une cuve équipée d'un outil de découpage transversal du caillé.

La figure 7 est une demi vue en coupe axiale et une demi-vue en élévation d'une cuve coiffée de son capot.

La figure 8 est une coupe transversale selon VIII VIII de la figure 7.

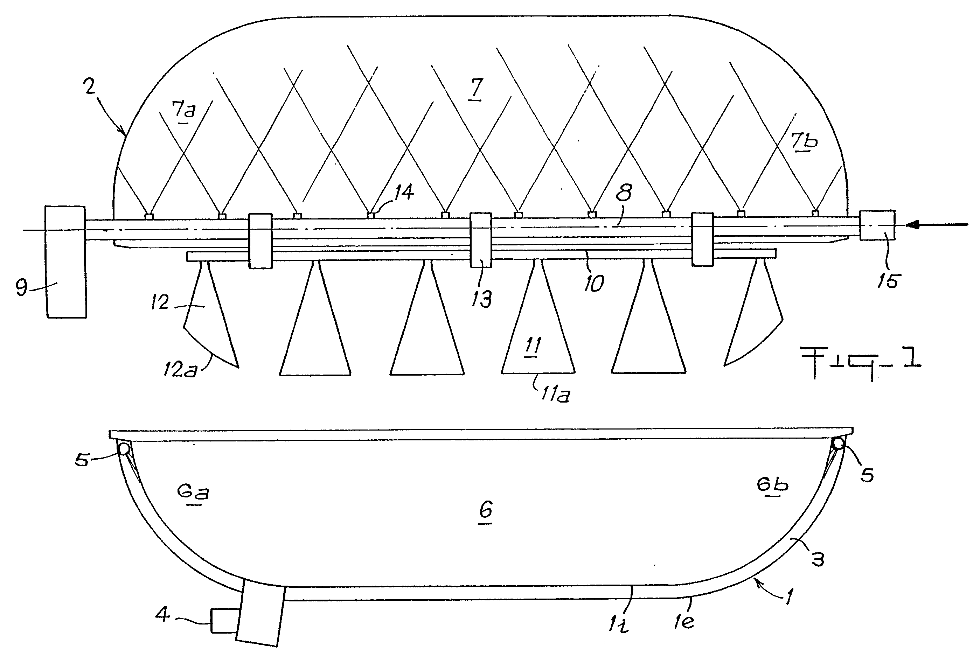

La figure 1 représente une vue en élévation schématique d'une cuve 1 équipée d'un couvercle ou capot 2 qui est représenté en position qui est la position de découpage longitudinal du caillé. Le capot 2 est au moins en partie transparent pour permettre de suivre les opérations à l'intérieur de la cuve.

La cuve 1 est destinée à recevoir du lait mélangé à un agent de caillage tel que de la présure ou un ferment lactique. Elle comporte une arrivée de lait ainsi qu'une arrivée d'agent de coagulation du lait qui ne sont pas spécifiques de l'invention et ne sont pas représentées sur la figure 1.

La cuve 1 comporte également une vanne automatique 4 située en fond de cuve qui permet de vidanger la cuve.

La cuve 1 comporte une paroi externe 1e et une paroi interne 1i. Ces deux parois sont parallèles et elles délimitent entre elles un espace intermédiaire 3 dans lequel on fait circuler de l'eau chaude pour maintenir la température du lait et du caillé dans la cuve. La cuve comporte à la partie supérieure de l'espace 3 une rampe périphérique perforée 5 de distribution d'eau chaude.

Les cuves utilisées habituellement dans l'industrie fromagère comportent un corps en forme d'auge demi-cylindrique ou de demi-virole à axe horizontal ouverte à la partie supérieure et fermée à ses deux extrémités par deux parois verticales planes.

Une cuve selon la présente invention comporte également un corps central 6 en forme d'auge demi-cylindrique mais les deux extrémités de cette auge sont fermées par deux fonds bombés 6a et 6b ayant la forme de deux quarts de sphère dont le rayon est identique à celui de l'auge demi-cylindrique, lesquels fonds 6a et 6b se raccordent tangentiellement à l'auge cylindrique.

Les deux parois 1e et 1i qui sont parallèles présentent la même forme cylindro-sphérique.

Cette forme cylindro-sphérique d'une cuve destinée au caillage du lait présente plusieurs avantages.

La cuve présente une surface interne arrondie, sans arêtes ni angles aigus, ce qui facilite le nettoyage de la cuve et ce qui permet de brasser les grains de caillé de façon uniforme sans effriter ceux-ci d'où une amélioration du rendement en fromage.

La fabrication de nombreux fromages, notamment des fromages dits à pâte persillée ou des fromages à pâte molle, comporte une opération de découpage du caillé en petits grains parallélépipédiques suivie d'une opération de brassage lent de la masse de grains afin de réaliser la synérèse du sérum c'est-à-dire la séparation du sérum de la masse coagulée.

Si les grains de caillé s'effritent pendant les opérations de découpage et/ou de brassage les petits fragments de caillé sont entraînés avec le sérum ce qui représente une perte de rendement pouvant représenter plusieurs pour cent de la masse de caillé.

Les cuves selon l'invention qui présentent une surface interne cylindro-sphérique unie, sans arête, évitent l'effritement des grains au contact des parois d'extrémité pendant les opérations de brassage de la masse de grains de caillé. On expliquera plus loin comment elles permettent également d'éviter l'effritement du caillé pendant les opération de découpage en grains sensiblement parallélépipédiques.

La figure 1 représente, en position relevée, un couvercle 2 équipant la cuve. Ce couvercle est monté par exemple sur des vérins verticaux non représentés qui permettent de le soulever.

Le couvercle 2 est cylindro-sphérique. Il comporte, comme la cuve, un corps central semi-cylindrique 7 à axe horizontal ayant une longueur et un rayon supérieur à ceux de l'auge cylindrique 6.

Ce corps central est prolongé par deux fonds bombés 7a, 7b en forme de quart de sphère de même rayon que le corps central 7.

Le couvercle 2 est équipé d'un arbre horizontal 8 qui est disposé sensiblement suivant l'axe du corps central cylindrique 7.

L'arbre 8 est entraîné en rotation lente par un groupe moto-réducteur 9 monté en bout d'arbre.

L'arbre 8 porte un dispositif de brassage du caillé constitué par un arbre 10 portant des pales de brassage 11, 12 ayant avantageusement une forme triangulaire évasée vers l'extérieur.

Toutes les pales sont situées dans un même plan radial.

Les pales 11 qui sont situées sur la longueur de l'auge cylindrique 6 présentent un bord libre 11a qui est parallèle à l'arbre 8 de sorte que lorsque les pales 11 sont entraînées en rotation par l'arbre 8, les bords 11a balayent une surface cylindrique parallèle à la surface interne de la cuve.

Les pales 12 qui sont situées aux deux extrémités ont un bord libre 12a en forme d'arc de cercle ayant un rayon sensiblement égal au rayon des fonds sphériques 6a et 6b de sorte que lorsque les pales 12 sont entraînées en rotation, les bords 12a suivent respectivement une surface sphérique parallèle à chacune des surfaces internes des fonds sphériques 6a et 6b.

L'arbre 10 est porté par des supports 13 qui le relient à l'arbre tournant 8.

Avantageusement l'arbre tournant 8 est un arbre creux qui porte des buses 14 de distribution d'eau et un joint tournant 15 qui le relie à une arrivée d'eau de lavage sous pression, mélangée à un agent de nettoyage.

Ce lavage s'effectue pendant la rotation de l'arbre de sorte que les jets d'eau atteignent toutes les surfaces intérieures de la cuve et du capot. Avantageusement les buses 14 sont diamétralement opposées par rapport aux pales de brassage 11, 12.

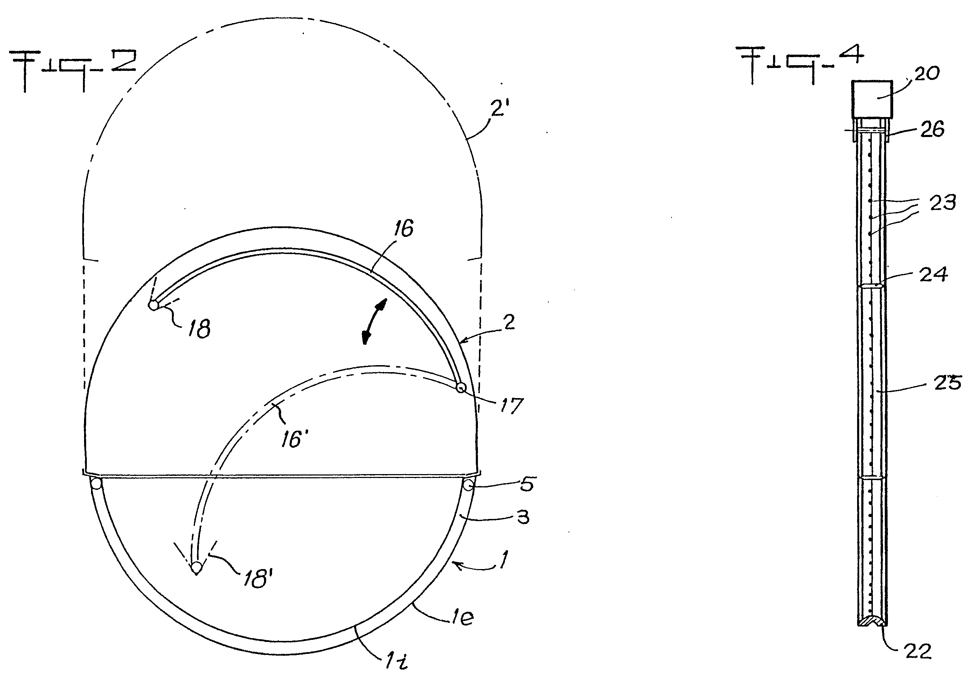

La figure 2 est une coupe schématique transversale de la figure 1 représentant en traits pleins le couvercle 2 coiffant la cuve 1 à double paroi 1e. 1i. On a représenté en traits mixtes le couvercle en positon relevée 2'. On retrouve sur cette figure la rampe 5 de distribution d'eau chaude dans l'espace 3 intermédiaire entre deux parois 1e, 1i.

Le repère 16 représente une canalisation en arc de cercle qui est solidaire du couvercle et qui est montée articulée autour d'un axe horizontal 17 parallèle à l'axe longitudinal de la cuve.

La canalisation 16 porte à son extrémité une crépine 18 qui s'étend sur la totalité ou une partie de la longueur de l'auge cylindrique 6. On a représenté en traits mixtes la position 16' que peut prendre la canalisation 16 pour placer la crépine dans la cuve afin d'aspirer le sérum contenu dans celle-ci.

La canalisation 16 est connectée à l'aspiration d'une pompe non représentée.

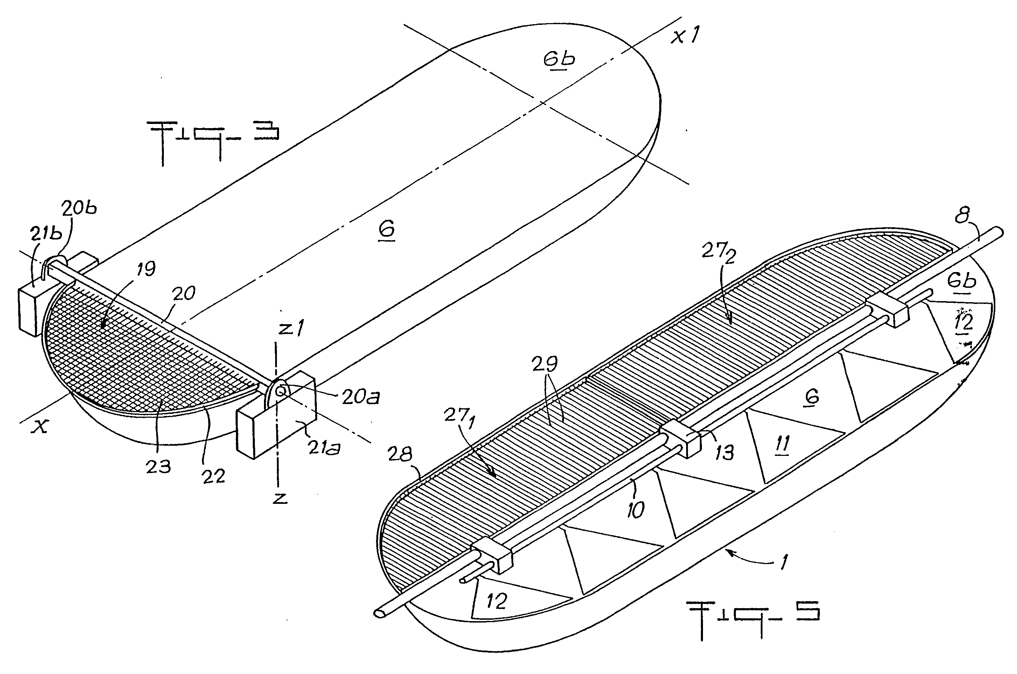

La figure 3 est une vue schématique en perspective de la cuve 1 et du dispositif 19 de découpage ou de tranchage longitudinal du lait caillé. Pour la clarté du dessin on a représenté uniquement la paroi interne 1i de la cuve.

Le dispositif de découpage longitudinal 19 comporte un arbre 20 transversal à la cuve qui est supporté par deux paliers 20a et 20b montés respectivement sur deux chariots 21a et 21b qui sont situés à l'extérieur de la cuve et qui sont déplaçables en translation parallèle à l'axe de la cuve. Les chariots 21a et 21b se déplacent par exemple sur des tiges de guidage ou sur des rails parallèles à l'axe de la cuve.

L'arbre 20 est monté pivotant autour de son axe par rapport aux chariots 21a et 21b.

L'arbre 20 porte une armature 22 en forme de demi-cercle dont le rayon est légèrement inférieur au rayon de l'auge cylindrique 6 et des fonds sphériques 6a et 6b. Des fils entrecroisés 23 respectivement parallèles et perpendiculaires à l'arbre 20 sont tendus en travers du cadre fermé constitué par l'arbre 20 et par l'armature circulaire 22. Avantageusement, d'autres armatures respectivement parallèles et perpendiculaires à l'arbre 20 peuvent être disposées à l'intérieur du cadre pour renforcer la rigidité du dispositif de découpage 19.

L'armature périphérique 22 et les armatures éventuelles internes au cadre sont composées de plats métalliques dont les bords sont affûtés en forme de lame tranchante.

L'arbre 20 est posé sur l'un des chariots 21a et il est porte par une tourelle qui est supportée par l'autre chariot 21b et qui pivote autour d'un axe vertical $zz_1$ de sorte qu'il est possible de placer le dispositif 19 à l'extérieur de la cuve pendant les opérations de découpage transversal.

Les opérations de découpage longitudinal au moyen de l'outil 19 comportent les opérations suivantes, à partir de la position où l'outil 19 est en attente à l'extérieur de la cuve.

On fait pivoter l'outil 19 autour de l'axe vertical $zz_1$ pour l'amener dans la position représentée sur la figure 3. On fait ensuite pivoter l'arbre 19 d'un quart de tour vers l'intérieur de la cuve de sorte que l'armature 22 balaye la surface interne du fond sphérique 6a. Pendant cette rotation les fils 23 perpendiculaires à l'arbre 20 parcourent des plans verticaux parallèles à l'axe $xx_1$ de la cuve tandis que les fils 23 parallèles à l'arbre 20 parcourent des surfaces cylindriques coaxiales centrées sur l'arbre 20. La rotation de l'arbre est commandée manuellement ou mécaniquement au moyen d'une poignée montée à l'extrémité de l'arbre. On déplace ensuite les deux chariots et l'outil de découpage 19 le long de la cuve cylindrique 6 ce qui entraîné le découpage du caillé par des plans verticaux et horizontaux parallèles à l'axe $xx_1$.

Ensuite on fait à nouveau pivoter l'arbre 20 d'un quart de tour vers l'extérieur ce qui entraîné le découpage longitudinal du caillé contenu dans le fond sphérique 6b. Après quoi on fait pivoter l'arbre 20 autour de l'axe vertical $zz_1$ pour amener l'outil 19 à l'extérieur de la cuve et libérer le passage pour l'outil de découpage transversal.

La combinaison d'une cuve cylindro-sphérique et d'un outil de découpage longitudinal selon l'invention permet ainsi d'introduire l'outil de découpage longitudinal dans le lait caillé, de trancher celui-ci longitudinalement et de sortir à nouveau l'outil en un seul passage sans avoir à descendre ou à remonter l'outil à travers caillé parallèlement au plan de l'outil ou sans avoir à faire pivoter l'outil dans le caillé comme dans les cuves existantes ce qui provoque inévitablement un effritement et des brisures du caillé.

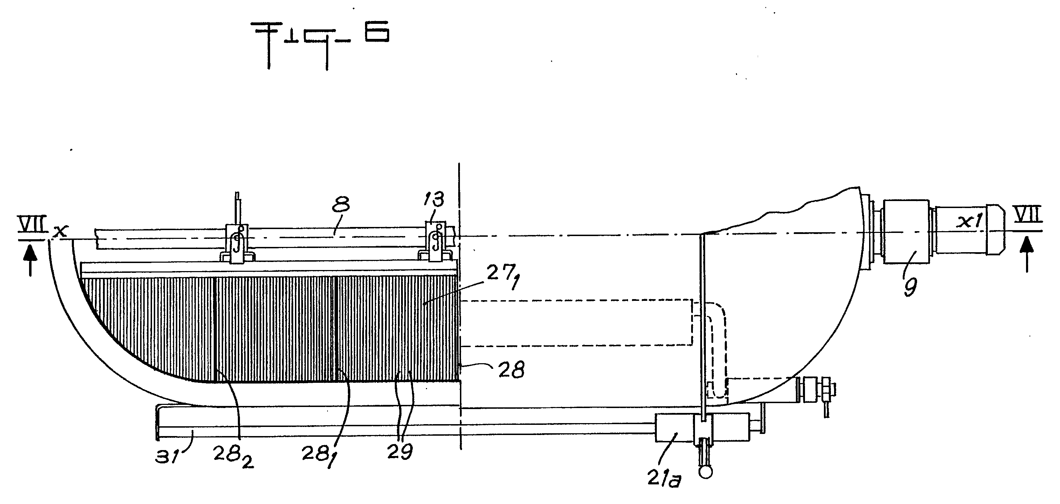

La figure 4 est une coupe transversale d'un mode de réalisation de l'outil 19 c'est-à-dire une coupe perpendiculaire à l'arbre 20.

On retrouve sur cette figure un arbre 20 ayant une section carrée, l'armature circulaire 22, des lames d'armature horizontales 24 une lame d'armature verticale 25 et des fils entrecroisés 23.

On voit que les deux bords des lames d'armature 24 et 25 situées à l'intérieur de l'encadrement sont taillés en biseau effilé.

Le repère 26 représente une bobine sur laquelle chacun des fils 23 perpendiculaires à l'arbre 20 est enroulé ce qui permet de tendre ces fils.

La figure 5 est une vue schématique d'une cuve 1 selon l'invention équipée d'un outil de découpage transversal de la masse de caillé.

On retrouve sur cette figure l'arbre tournant longitudinal 8 qui porte l'arbre 10 sur lequel sont fixées les pales de brassage radiales 11 et 12 qui sont représentées dans le plan diamétral horizontal de la cuve.

Un ensemble de plusieurs outils de découpage transversal du caillé est monté de façon démontable sur l'arbre 8.

La figure 5 représente un exemple de réalisation comportant deux outils de découpage transversal $27_1$ et $27_2$ symétriques par rapport au plan médian transversal de la cuve.

Le nombre d'outils de découpage transversal peut être différent.

Les outils $27_1$ et $27_2$ sont diamétralement opposés par rapport aux pales de brassage.

Chaque outil $27_1$, $27_2$ comporte une armature périphérique formant un cadre et des fils 29 qui sont tendus en travers de ce cadre perpendiculairement à l'arbre tournant 8.

Comme on le voit les armatures périphériques épousent la forme des fonds sphériques 6a et 6b de la cuve.

Pour effectuer le découpage transversal du caillé on monte les outils $27_1$, $27_2$ sur l'arbre 8 et on place ceux-ci dans le plan diamétral horizontal du couvercle 2 puis on pose le couvercle sur la cuve ensuite on fait tourner lentement l'arbre 8 d'un demi-tour dans le sens tel que les outils $27_1$, $27_2$ traversent le caillé et se retrouvent placés dans le plan diamétral horizontal.

Pendant cette rotation les fils 29 découpent des tranches de caillé transversales et les pales de brassage 11 et 12 se déplacent à l'intérieur du couvercle. Les tranches transversales recoupent les baguettes longitudinales obtenues pendant l'opération de découpage longitudinal et elles délimitent des grains de forme parallélépipédique.

Une fois le découpage transversal terminé. on démonte les outils $27_1$, $27_2$ et on utilise les pales de brassage 11, 12 pour faire tourner lentement la masse de grains de caillé afin que les grains situés à la partie inférieure remontent vers la surface afin de favoriser la synérèse du sérum.

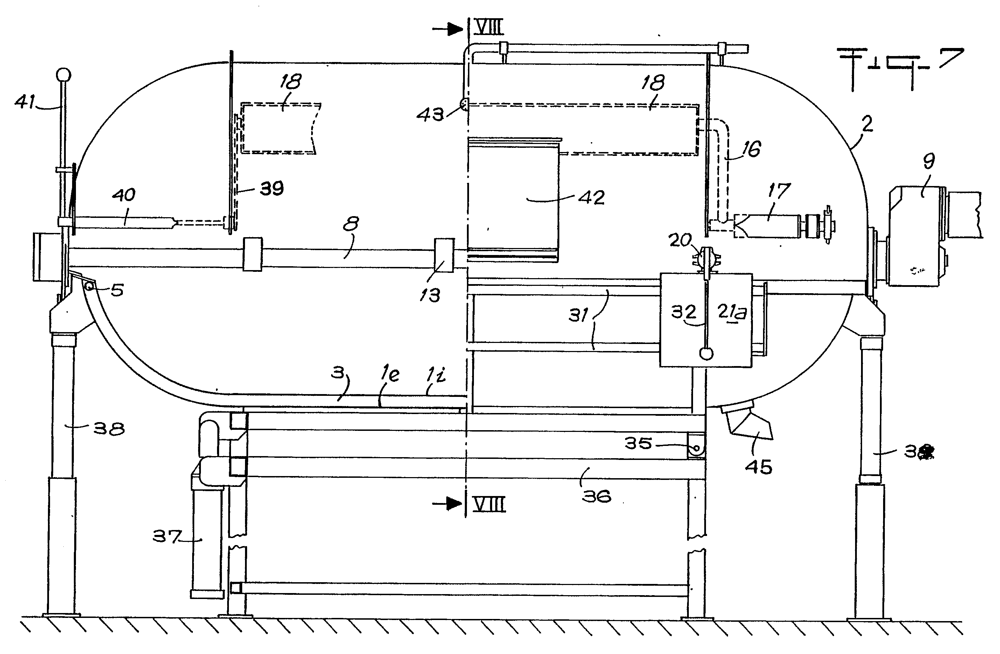

La figure 6 représente une demi-vue de dessus d'un mode de réalisation d'une cuve selon l'invention.

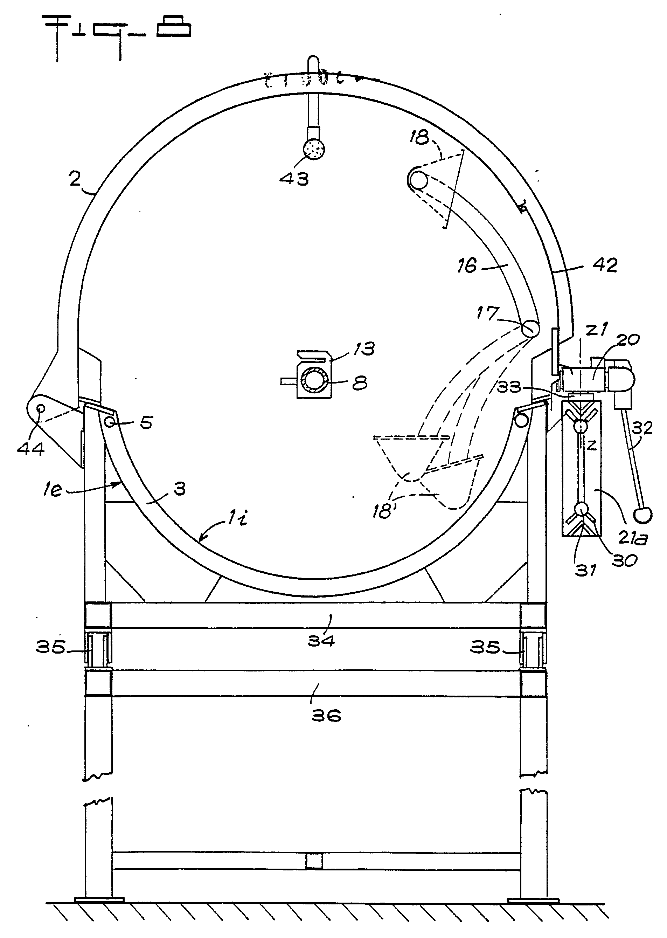

La figure 7 est une demi-coupe verticale axiale et une demi-vue en élévation de la figure 6.

La figure 8 est une coupe transversale selon VIII VIII de la figure 7.

On voit sur ces figures 6 l'arbre tournant 8 et le moto-réducteur 9 entraînant celui-ci.

L'arbre 8 est entraîné à une vitesse de l'ordre de 10 tr.min.

On voit un des chariots 21a qui comporte des galets 30 qui roulent sur deux rails ou tiges de guidage 31 parallèles à l'axe $xx_1$ de la cuve.

On voit sur les figures 7 et 8 le bout de l'arbre transversal 20 qui porte une poignée 32 qui permet de le faire tourner manuellement.

On voit également sur la figure 8 que le bout de l'arbre 20 est supporté par une tourelle 33 qui pivote par rapport au chariot 21a autour d'un axe vertical $zz_1$.

La figure 6 représente un des outils $27_1$ de découpage transversal avec son armature d'encadrement 28, des armatures internes $28_1$ et $28_2$ et des fils 29 qui sont espacés de 15 mm.

On voit que l'outil 27 comporte des poignées 33 qui permettent de le monter de façon amovible dans des supports 13 portés par l'arbre 8, le blocage étant réalisé par des pinces élastiques.

Les figures 7 et 8 représentent une cuve montée sur un châssis 34 qui est relié par une articulation 35 à un deuxième châssis 36 posé sur le sol. Un vérin 37 permet de faire pivoter le châssis 34 et la cuve autour de l'articulation 35 pour incliner longitudinalement la cuve. Le repère 45 représente une sortie de vidange de la cuve.

Les figures 7 et 8 représentent le couvercle 2 posé sur la cuve 1. Le couvercle est équipé de deux vérins 38 qui permettent de le soulever.

On voit à l'intérieur du couvercle la crépine d'aspiration du sérum 18 représentée en pointillés qui s'étend sur toute la longueur de la partie cylindrique.

Une extrémité de la crépine d'aspiration est montée sur un bras 39 en forme d'arc de cercle qui est monté sur un arbre longitudinal 40 portant un levier de manoeuvre 41 situé à l'extérieur du couvercle.

Le levier 41 se déplace le long d'un secteur cranté et permet de positionner la crépine plus ou moins profondément dans la cuve pour aspirer le sérum.

La deuxième extrémité de la crépine d'aspiration 18 est supportée par une canalisation 16 en forme d'arc de cercle qui pivote autour d'un axe longitudinal 17.

On a représenté en traits pleins sur la figure 8 la position relevée de la crépine 18, et de la canalisation 16.

Le bras 39 est parallèle à la canalisation 16. On voit que dans cette position la crépine 18, la canalisation 16 et le bras 39 sont rabattus contre la face interne du couvercle, dans un espace qui correspond à la différence de rayon entre la paroi interne 1i de la cuve et la paroi du couvercle.

Ainsi, pendant les opérations de brassage et de découpage du caillé la crépine 18 et les supports de celle-ci ne gênent pas le passage des pales de brassage ou des outils de découpage.

Le repère 42 représente un hublot transparent ouvrant.

Le repère 43 représente une tête de lavage destinée à distribuer de l'eau de lavage.

La figure 8 représente un mode de réalisation dans lequel le couvercle 2 est relié à la cuve par un axe d'articulation 44.

## Revendications

1. Procédé de fabrication de fromage comportant une étape de caillage du lait dans une cuve demi-cylindrique à axe horizontale (1) et des opérations de découpage longitudinal et transversal et de brassage du caillé caractérisé par les opérations suivantes :
- on fait cailler le lait dans une cuve cylindro-sphérique comportant deux fonds (6a, 6b) en forme de quart de sphère qui prolongent les extrémités d'une cuve cylindrique (6) ;
- on découpe longitudinalement le caillé au moyen d'un outil de découpage (19) qui comporte une grille de fils entrecroisés (23) tendus à l'intérieur d'un cadre fermé comportant une armature périphérique (22) en forme de demi-cercle de même rayon que ladite cuve cylindrique et un arbre (20) qui forme l'axe de ladite armature, et les opérations de découpage longitudinal comportent les étapes suivantes :
- on fait pivoter ledit arbre (20) autour d'un axe vertical ($zz_1$) pour amener ledit outil (19) en position horizontale au-dessus de l'une des fonds sphériques,
- on fait tourner ledit arbre d'un quart de tour autour de son axe vers l'intérieur de la cuve ;
- on déplace ledit arbre et ledit outil en translation longitudinale le long de la cuve cylindrique (6) ;
- on fait tourner à nouveau ledit arbre (20) d'un quart de tour dans le même sens pour amener ledit outil (19) en position horizontal et on fait pivoter ledit arbre (20) autour dudit axe vertical ($zz_1$) pour amener ledit outil (19) à l'extérieur de la cuve.

2. Cuve cylindro-sphérique destinée à la fabrication de fromage du type comportant une auge demi-cylindrique (6), une arrivée de lait, une arrivée d'un agent de coagulation du lait, des moyens de vidange, un capot (2) et des outils (19, $27_1$, $27_2$) de découpage longitudinal et transversal et de brassage du caillé caractérisé en ce que ladite auge demi-cylindrique (6) est fermée, à ses deux extrémités, par deux fonds bombés (6a, 6b) en forme de deux quarts de sphère ayant un rayon identique au rayon de ladite auge demi-cylindrique (6).

3. Cuve selon la revendication 2 comportant en outre un outil (19) de découpage longitudinal du caillé qui comporte une grille de fils entrecroisés (23) qui sont montés à l'intérieur d'un cadre composé d'un arbre horizontal (20) et d'une armature périphérique (22) en forme de demi-cercle ayant un rayon identique à celui de ladite auge demi-cylindrique (6) caractérisé en ce que ledit arbre est monte pivotant dans deux paliers (20a, 20b) montés sur deux chariots (21a, 21b) qui sont déplaçables en translation longitudinale à l'extérieur de ladite cuve.

4. Cuve selon la revendication 2 caractérisé en ce qu'une extrémité dudit arbre (20) est reliée à l'un des dits chariots (21a) par une tourelle (33) qui pivote autour d'un axe vertical (zz₁) ce qui permet d'amener ledit outil (19) à l'extérieur de ladite cuve pendant les opérations de découpage transversal.

5. Cuve selon l'une quelconque des revendications 2 à 4 caractérisée en ce que ledit capot (2) comporte une partie centrale (7) en forme de demi-cylindre et deux fonds bombés (7a, 7b) en forme de quarts de sphère raccordés tangentiellement à ladite partie centrale.

6. Cuve selon la revendication 5 caractérisé en ce que ledit capot est équipé d'un arbre axial (8) qui est entraîné en rotation par un groupe moto-réducteur (9), lequel arbre porte des pales de brassage (11, 12) qui sont situées dans un même plan radial.

7. Cuve selon la revendication 6 caractérisé en ce que lesdites pales (11, 12) ont une forme triangulaire évasée vers l'extérieur, et les pales (12) situées aux deux extrémités ont un bord libre (12a) en forme d'arc de cercle qui épouse la forme desdits fonds bombés (6a, 6b).

8. Cuve selon l'une quelconque des revendications 6 à 7 caractérisée en ce que ledit arbre axial (8) est creux, il porte des buses (14) de distribution d'eau de lavage et il est connecté par l'intermédiaire d'un joint tournant (15) sur une arrivée d'eau de lavage sous pression.

9. Cuve selon l'une quelconque des revendications 6 à 8 caractérisé en ce que ledit arbre axial (8) porte des supports (13) sur lesquels on peut monter de façon amovible des outils (27₁, 27₂) de découpage transversal du caillé, lesquels outils comportent des fils radiaux (29) tendus à l'intérieur de cadres (28) lesquels cadres comportent, aux deux extrémités de la cuve, un secteur en forme de quart de cercle qui épouse la forme des dits fonds bombés (6a, 6b).

10. Cuve selon l'une quelconque des revendications 2 à 9 caractérisée en ce qu'elle comporte deux parois parallèle (1i, 1e) qui délimitent entre elles un espace intermédiaire (3) dans lequel est disposée une canalisation perforée périphérique (5) qui est connectée sur une arrivée d'eau afin de maintenir dans la cuve une température déterminée.

11. Cuve selon l'une quelconque des revendications 2 à 10 caractérisée en ce que ledit capot (2) est équipé d'une canalisation (16) en forme d'arc de cercle, de même rayon que le couvercle qui est connectée sur une extrémité d'une crépine d'aspiration (18) qui s'étend sur toute la longueur de la partie cylindrique (7) du couvercle, laquelle crépine est portée à son autre extrémité par un bras (39) et ledit bras ainsi que ladite canalisation sont montés rotatifs autour d'un même axe longitudinal (40) de sorte qu'il est possible de rabattre l'ensemble contre la paroi interne du couvercle pendant les opérations de brassage et de découpage transversal du caillé et ladite canalisation (16) est connectée sur l'aspiration d'une pompe qui aspire le sérum.

Fig. 1

Fig-4

20
26
23
24
25
22

Fig-2

2'
2
17
16
5
3
1
1e
1i
16'
18
18'

9

Fig. 5

Fig. 3

Fig. 6

EP 0 406 138 A1

Fig. 7

41

18

43

18

2

9

39

40

16

42

17

8

20

13

31

32   21a

3   1e   1i

38

35

45

36

37

VIII

EP 0 406 138 A1

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3643135 (HERMANN WALDNER GMBH & CO.) <br> * colonne 1, ligne 51 - colonne 4, ligne 7; figure * <br> --- | 1-2, 5-6, 8-9 | A01J25/06 |
| A | GB-A-1058519 (HOLVRIEKA N.V.) <br> * page 1, lignes 47 - 62; figure * <br> --- | 3, 7 | |
| A | EP-A-93647 (BURTON-CORBLIN) <br> --- | | |
| A | US-A-4501196 (F.A.LOICHINGER ET AL) <br> --- | | |
| A | FR-A-2524265 (R.GABRIEL-ROBEZ) <br> ----- | | |

DOMAINES TECHNIQUES
RECHERCHES (Int. Cl.5)

A01J

Le présent rapport a été établi pour toutes les revendications

| Lieu de la recherche | Date d'achèvement de la recherche | Examinateur |
|---|---|---|
| LA HAYE | 27 SEPTEMBRE 1990 | NEHRDICH H.J |